# EUROPÄISCHE PATENTSCHRIFT

(11) **EP 4 239 153 B1**
(45) Veröffentlichungstag und Bekanntmachung des Hinweises auf die Patenterteilung: **26.11.2025**
(21) Anmeldenummer: 22160358.2
(22) Anmeldetag: 04.03.2022
(51) Int. Cl.: E05D 7/14

(54) **BRANDSCHUTZGEHÄUSE, INSBESONDERE BRANDSCHUTZSCHRANK**
FIRE PROTECTION HOUSING, ESPECIALLY FIRE PROTECTION CABINET
BOÎTIER DE PROTECTION INCENDIE, EN PARTICULIER ARMOIRE DE PROTECTION INCENDIE

(43) Veröffentlichungstag der Anmeldung: 06.09.2023
(73) Patentinhaber: din - Dietmar Nocker Facilitymanagement GmbH & Co KG, 4030 Linz (AT)
(72) Erfinder:
(74) Vertreter: Jell, Friedrich

(56) Entgegenhaltungen:
- WO-A1-2011/058567
- DE-U1- 202017 106 548
- KR-B1- 102 297 039
- US-A- 1 547 720

## Beschreibung

Die Erfindung betrifft ein Brandschutzgehäuse, insbesondere Brandschutzschrank, mit einem quaderförmigen Außenkorpus, mit einem quaderförmigen Innenkorpus und mit mehreren Eckwinkelbeschlägen, wobei der Außenkorpus eine brandhemmende Außenbeplankung und vier Innenecken aufweist, wobei der Innenkorpus in den Außenkorpus zumindest abschnittsweise mit Abstand zu diesem eingesetzt ist.

Aus der DE29500142U1 ist ein Brandschutzgehäuse mit einem quaderförmigen Außenkorpus und einem quaderförmigen Innenkorpus bekannt. Der Innenkorpus steht mit seiner Bodenseite auf dem Boden des Außenkorpus auf und ist in den Außenkorpus an seinen anderen Seiten mit Abstand zu diesem eingesetzt - was die Brandbeständigkeit erhöht. Der Abstand zwischen Innenkorpus und Außenkorpus vermindert jedoch die mechanische Stabilität des Brandschutzgehäuses, beispielsweise beim Transport zu seinem Aufstellungsort. Zudem können auch Stöße auf ein Brandschutzgehäuse am Aufstellungsort die Integrität des Brandschutzgehäuses oder in diesem vorgesehenen Mittel gefährden.

Aus der US1547720A ist ein anderes Beispiel eines Brandschutzgehäuses bekannt.

Die Erfindung hat sich daher die Aufgabe gestellt, ein Brandschutzgehäuse der eingangs geschilderten Art konstruktiv derart zu verändern, dass neben der erhöhten Brandbeständigkeit das Brandschutzgehäuse auch eine hohe mechanische Stabilität aufweist.

Die Erfindung löst die gestellte Aufgabe durch die Merkmale des Anspruchs 1.

Indem je ein, insbesondere metallischer, Eckwinkelbeschlag im Bereich einer Innenecke der vier Innenecken des Außenkorpus vorgesehen und am Außenkorpus befestigt ist, kann die Standfestigkeit des Brandschutzgehäuses weiter erhöht werden.

Erstrecken sich die Eckwinkelbeschläge bis zum Innenkorpus und sind diese Eckwinkelbeschläge mit diesem verbunden, um ihn im Außenkorpus zu halten, ist nicht nur - auf konstruktiv einfache Weise gelöst - der Innenkorpus im Außenkorpus positionierbar, es kann auch eine hohe Brandbeständigkeit sichergestellt werden. Die Eckwinkelbeschläge können nämlich im Brandfall den Abstand zwischen Außenkorpus und Innenkorpus standfest sicherstellen, insbesondere wenn diese Eckwinkelbeschläge metallisch, vorzugsweise aus Stahl, sind.

Die Brandbeständigkeit des über die Eckwinkelbeschläge im Außenkorpus gehaltenen Innenkorpus kann weiter erhöht werden, wenn der Innenkorpus in den Außenkorpus mit Abstand zur Bodenwand, zur Deckelwand und zu den beiden Seitenwänden des Außenkorpus eingesetzt ist.

Sind die Eckwinkelbeschläge jeweils an drei aneinander angrenzenden Wänden des Außenkorpus einer Innenecke befestigt, ist die mechanische Stabilität des Brandschutzschranks weiter erhöhbar.

Vorzugsweise weist der Innenkorpus eine Innenbeplankung auf, an die die Eckwinkelbeschläge standfest anschließen und auch im Brandfall positionsgenau im Außenkorpus halten können. Vorzugsweise weist diese Innenbeplankung Brandschutzplatten auf oder besteht aus solchen.

Die Montage des Brandschutzschranks, insbesondere wenn dieser als Bausatz zum Aufstellort geliefert wird, kann sich erleichtern, wenn zwei einander auf gleicher Höhe des Außenkorpus gegenüberliegend angeordnete, obere Eckwinkelbeschläge je ein Schnappelement aufweisen, die mit dem Innenkorpus verschnappbar ausgebildet sind. Außerdem ist damit der Zusammenbau des Brandschutzschranks vergleichsweise einfach handhabbar.

Vorzugsweise weisen die Eckwinkelbeschläge Anschläge auf, an die der Innenkorpus anschlägt, um damit die Positionierung des Innenkorpus im Außenkorpus weiter zu erleichtern.

Der Innenkorpus kann besonders standfest im Außenkorpus gehalten werden, wenn der Innenkorpus auf unteren Anschlägen von zwei einander auf gleicher Höhe des Außenkorpus gegenüberliegend angeordneten, unteren Eckwinkelbeschlägen aufliegt und an oberen Anschlägen von zwei einander auf gleicher Höhe des Außenkorpus gegenüberliegend angeordneten, oberen Eckwinkelbeschläge ansteht.

Eine verbesserte Brandbeständigkeit ist erreichbar, wenn die Außenbeplankung Brandschutzplatten aufweist, insbesondere aus solchen besteht.

Erfindungsgemäß weist das Brandschutzgehäuse eine brandhemmende Tür zum Öffnen und Verschließen des Brandschutzgehäuses auf.

Die Konstruktion des Brandschutzgehäuses kann vereinfacht werden, wenn die brandhemmende Tür zum gemeinsamen Öffnen und Verschließen des Innen- und Außenkorpus ausgebildet ist.

Die Anlenkung der Tür am Brandschutzgehäuse ist konstruktiv weiter vereinfachbar, indem das Brandschutzgehäuse mehrere Scharniere aufweist, welche die Tür tragen, wobei an jedem Eckwinkelbeschlag an einer Gehäuseseite des Brandschutzgehäuses zumindest ein Scharnier befestigt ist.

Eine brandbeständige Verriegelung der Tür des Brandschutzgehäuses kann beispielsweise geschaffen werden, wenn das Brandschutzgehäuse einen Verriegelungsmechanismus für die Tür an mindestens einem Eckwinkelbeschlag aufweist. Die Konstruktion des Verriegelungsmechanismus ist einfach realisierbar, wenn er über zwei Zapfen an der Tür in zwei Eckwinkelbeschläge an einer Gehäuseseite des Brandschutzgehäuses zum Verriegeln der Tür eingreift. Vorzugsweise befinden sich die zwei Zapfen mindestens an einer beweglich gelagerten Stange.

Um das Brandschutzgehäuse standfest befestigen zu können, kann vorgesehen sein, dass die Eckwinkelbeschläge je mindestens eine Montageöffnung für ein Halteelement zur Befestigung des Brandschutzgehäuses aufweisen.

Das erfindungsgemäße Brandschutzgehäuse eignet sich bei einer Notbeleuchtungs- und/oder Sicherheitsbeleuchtungsanlage.

Die Erfindung hat sich außerdem die Aufgabe gestellt, ein Verfahren zur Montage eines Brandschutzgehäuses zu vereinfachen. Die Erfindung löst die gestellte Aufgabe durch die Merkmale des Anspruchs 14.

Indem zuerst der Außenkorpus am Aufstellungsort des Brandschutzgehäuses befestigt wird, kann sich das Verfahren zur Montage besonders erleichtern. Dies, weil im Gegensatz zum Stand der Technik nicht das gesamte Brandschutzgehäuse, sondern lediglich ein Teil davon, nämlich der Außenkorpus, befestigt wird, beispielsweise an einer Wand am Aufstellungsort. Danach ist lediglich der Innenkorpus einzusetzen, um damit das Brandschutzgehäuse zu vervollständigen bzw. vollständig zu montieren. Dabei kann der Innenkorpus bereits mit mindestens einer Komponente der Notbeleuchtungs- und/oder Sicherheitsbeleuchtungsanlage, beispielsweise der Notbeleuchtungszentrale, bestückt sein, um das Verfahren zur Montage noch weiter zu erleichtern.

In den Figuren ist beispielsweise der Erfindungsgegenstand anhand einer Ausführungsvariante dargestellt. Es zeigen
- Fig. 1: eine Frontansicht auf ein Brandschutzgehäuse mit geöffneter Tür,
- Fig. 2: eine Detailansicht der Fig. 1 auf einen oberen Eckwinkelbeschlag des Brandschutzgehäuses,
- Fig. 3: eine Detailansicht der Fig. 1 auf einen unteren Eckwinkelbeschlag des Brandschutzgehäuses und
- Fig. 4: ein Verriegelungsmechanismus des Brandschutzgehäuses nach Fig. 1.

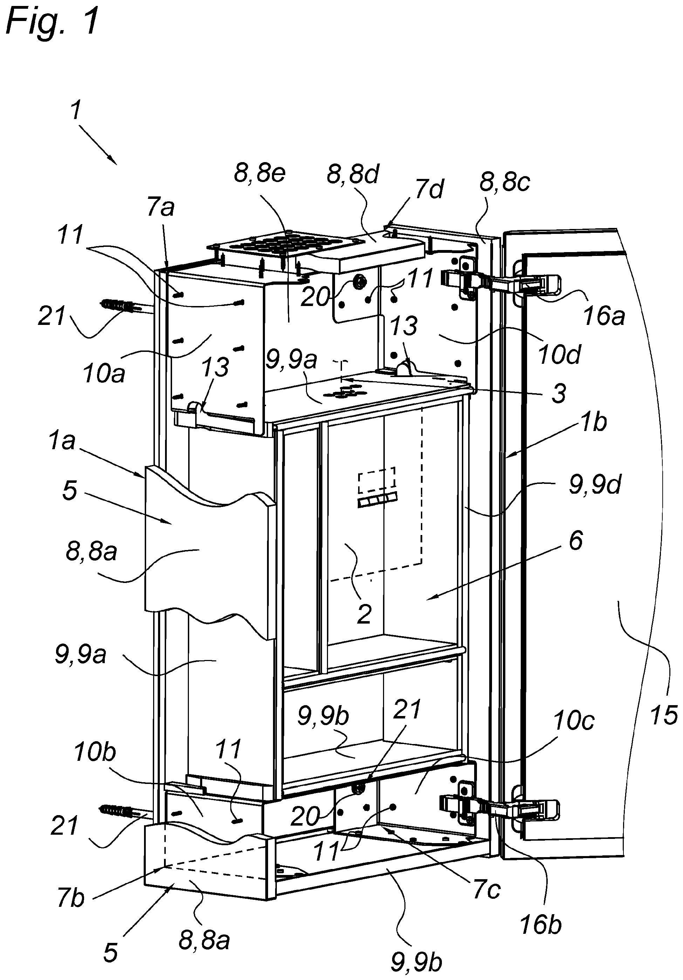

Das nach Fig. 1 dargestellte Brandschutzgehäuse 1 zur Aufnahme einer Notbeleuchtungszentrale 2 einer Notbeleuchtungsanlage 3 ist als Brandschutzschrank ausgebildet.

Hierzu weist das Brandschutzgehäuse 1 einen Außenkorpus 5 und einen Innenkorpus 6 auf. Außenkorpus 5 und Innenkorpus 6 sind quaderförmig - wie in Fig. 1 zu erkennen. Damit weist der Außenkorpus 5 vier Innenecken 7a, 7b, 7c, 7d auf. Zudem weist der Außenkorpus 5 eine brandhemmenden Außenbeplankung 8 aus Brandschutzplatten 8a, 8b, 8c, 8d, 8e auf - und kann somit eine vergleichsweise hohe Brandbeständigkeit gewährleisten.

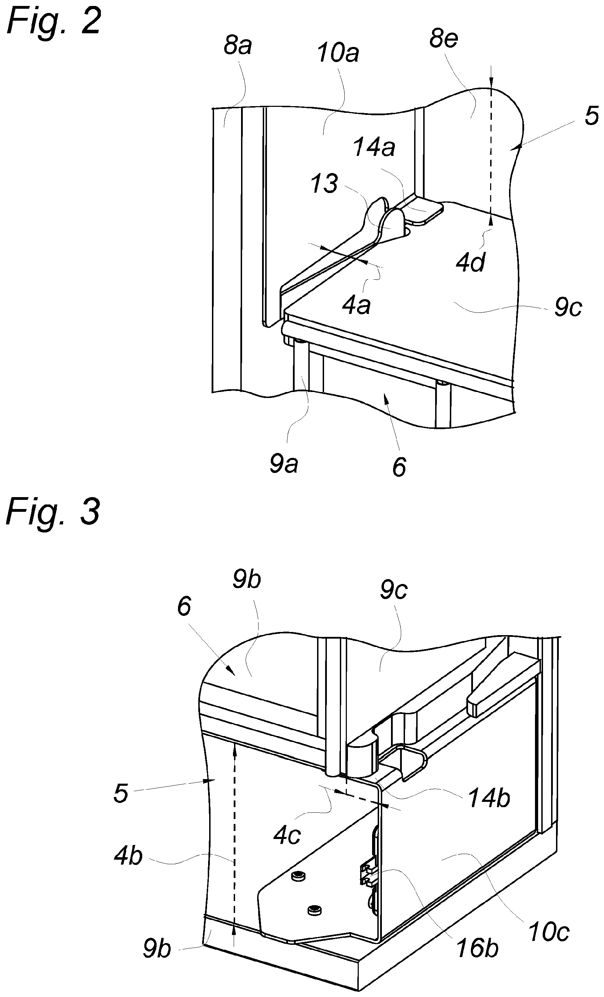

Der Innenkorpus 6 ist in den Außenkorpus 5 mit Abstand 4a, 4b, 4c bzw. 4d zum Außenkorpus 5 eingesetzt, und weist auch eine Innenbeplankung 9 auf - wie in Fig. 1 in Zusammenschau mit den Figuren 2 und 3 zu erkennen.

Das Brandschutzgehäuse 1 umfasst des Weiteren mehrere Eckwinkelbeschläge 10a bis 10d. Erfindungsgemäß sind diese metallischen Eckwinkelbeschläge 10a bis 10d aus Stahl, beispielsweise aus einem Stahlblech, je in einer Innenecke 7a, 7b, 7c oder 7d der vier Innenecken 7a, 7b, 7c und 7d des Außenkorpus 5 vorgesehen und über Befestigungsmittel 11, nämlich selbstschneidende Schrauben, am Außenkorpus 5, und zwar an der Außenbeplankung 8 befestigt.

Die Eckwinkelbeschläge 10a bis 10d erstrecken sich zudem bis zum Innenkorpus 6. Hierzu weisen die Eckwinkelbeschläge jeweils einen gegenüber den anderen Stegen verlängerten Steg auf, der bis zum Innenkorpus 6 verläuft. Damit sind die Eckwinkelbeschläge 10a bis 10d mit dem Innenkorpus 6 mechanisch verbunden, um den Innenkorpus 6 in und am Außenkorpus 5 zu halten sowie im Außenkorpus 5 zu positionieren.

Dies erfolgt derart, dass damit der Innenkorpus 6 in den Außenkorpus 5 einen Abstand 4a, 4b, 4c bzw. 4d zur Bodenwand, zur Deckelwand und zu den beiden Seitenwänden des Außenkorpus 5 aufweist. Die Rückwand des Innenkorpus 6 liegt an der Rückwand des Außenkorpus 5 an.

Die zudem in der Fig. 1 für alle Eckwinkelbeschläge 10a bis 10d beispielsweise am Eckwinkelbeschlag 10d klar zu erkennen, sind alle Eckwinkelbeschläge 10a bis 10d, jeweils an drei aneinander angrenzenden Wänden, nämlich Rückwand, Seitenwand und entweder Bodenwand oder Deckelwand, der Brandschutzplatten 8a, 8b, 8c, 8d, 8e des Außenkorpus 5 befestigt. Damit bilden die beiden Seitenwände die Brandschutzplatten 8a und 8c, die Bodenwand die Brandschutzplatte 8b und die Deckelwand die Brandschutzplatte 8d aus. Hierzu weisen die Eckwinkelbeschläge 10a bis 10d je drei senkrecht zueinander verlaufende Stege auf.

Zudem wird der Innenkorpus 6 durch eine Innenbeplankung 9 aus Brandschutzplatten 9a, 9b, 9c, 9d gebildet - was zu einer hohen Brandbeständigkeit führt.

Die oberen Eckwinkelbeschläge 10a, 10d liegen formschlüssig am Innenkorpus 6 an, und zwar weisen diese je ein als Balken ausgebildetes Schnappelement 13 auf, das mit dem Innenkorpus 6 verschnappt, und diesen in einer Bewegungsachse x in der Horizontalen sperrt.

Den Eckwinkelbeschlägen 10a bis 10d sind auch Anschläge 14 zugeordnet, welche die anderen Bewegungsachsen y, z des Innenkorpus 6 im Außenkorpus 5 sperren. Die Anschläge 14 werden von vorzugsweise rechtwinkelig an den Eckwinkelbeschlägen 10a bis 10d abgewinkelten Laschen gebildet.

So sperren beispielsweise die oberen Anschläge 14a der oberen Eckwinkelbeschläge 10a, 10d die vertikale Bewegungsachse z des Innenkorpus 6 im Außenkorpus 5, wie in Fig. 2 zu erkennen, in eine Richtung. Der Innenkorpus 6 steht nämlich an den zwei einander auf gleicher Höhe des Außenkorpus 5 gegenüberliegend angeordneten, oberen Eckwinkelbeschlägen 10a, 10d an.

An den unteren Eckwinkelbeschlägen 10b, 10c liegt der Innenkorpus 6 auf den unteren Anschlägen 14b von zwei einander auf gleicher Höhe des Außenkorpus 5 gegenüberliegend angeordneten, unteren Eckwinkelbeschlägen 10b, 10c auf - wie in Fig. 3 zu erkennen. Damit ist die andere Richtung der vertikalen Bewegungsachse z gesperrt, was unter Berücksichtigung der oberen Anschläge 14b die Bewegungsachse z insgesamt sperrt.

Das Brandschutzgehäuse 1 weist zudem eine brandhemmende Tür 15 zum Öffnen und Verschließen des Brandschutzgehäuses 1 auf, die zudem für das Öffnen und Verschließen des Außen- und Innenkorpus 5, 6 dient. Hierzu weist diese vorzugsweise einfalzige Tür 15 eine äußere Brandschutzplatte 15a zum Verschließen des Außenkorpus 5 und eine innere Brandschutzplatte 15b zum Verschließen des Innenkorpus 6 auf.

Die Tür 15 ist über Scharniere 16a, 16b des Brandschutzgehäuses 1 am Brandschutzgehäuse 1 beweglich gelagert. Je ein Scharnier 16a, 16b ist an einem Eckwinkelbeschlag 10c oder 10d an der rechten bzw. zweiten Gehäuseseite 1b des Brandschutzgehäuses 1 befestigt.

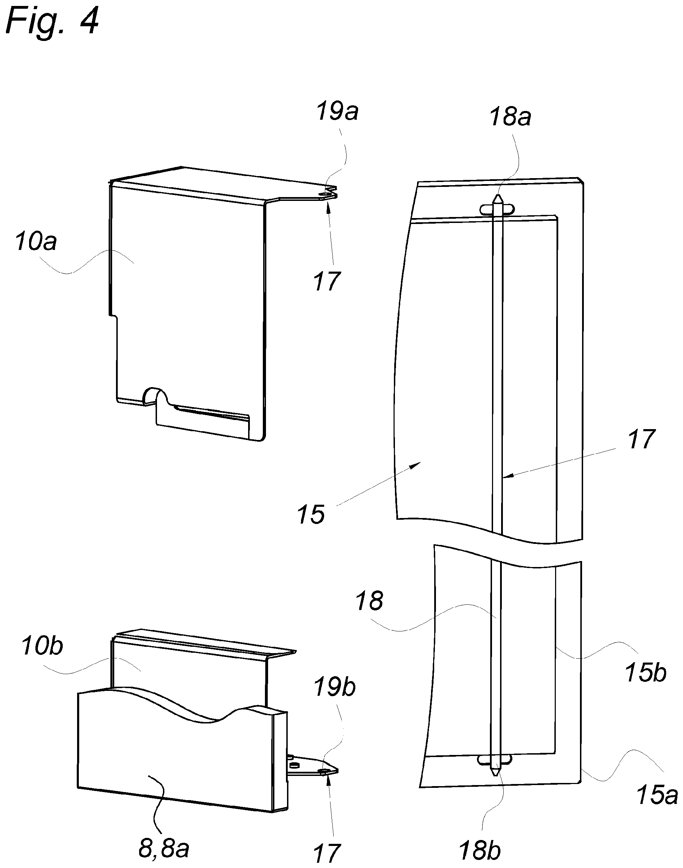

Die Tür 15 des Brandschutzgehäuses 1 wird brandbeständig verriegelt, indem das Brandschutzgehäuse 1 einen Verriegelungsmechanismus 17 für die Tür 15 an zwei Eckwinkelbeschlägen 10a, 10b an der linken bzw. ersten Gehäuseseite 1a aufweist - siehe Fig. 4.

Hierzu ist in der Tür 15 eine vertikale Stange 18 mit zwei Zapfen 18a, 18b vorgesehen. Die vertikale Stange 18 ist in der Tür vertikal beweglich gelagert, und kann mit ihren Zapfen 18a, 18b in zwei Aufnahmen 19a, 19b der beiden Eckwinkelbeschläge 10a, 10b an der ersten Gehäuseseite 1a einfahren, um die Tür 15 zu verriegeln. Ein nicht dargestellter Betätigungsmechanismus kann die Stange 18 hierzu in Bewegung setzen.

Wie zudem in Fig. 1 erkennbar, ist das Brandschutzgehäuse 1 über vier Befestigungselemente 21, nämlich Wandschrauben, an einer Wand am Aufstellungsort befestigt. Hierzu weisen die Eckwinkelbeschläge 10a, 10b, 10c, 10d je eine Montageöffnung 20 auf, die von den Befestigungselementen 21 durchgriffen werden und das Brandschutzgehäuse 1 an der Wand halten.

Es ist aber auch vorstellbar, dass das Brandschutzgehäuse 1 über eine nicht dargestellte Konsole am Aufstellungsort befestigt wird. Diese Konsole kann an der Wand, am Boden und/oder an der Decke befestigt sein.

## Patentansprüche

1. Brandschutzgehäuse, insbesondere Brandschutzschrank, mit einem quaderförmigen Außenkorpus (5), mit einem quaderförmigen Innenkorpus (6) und mit mehreren Eckwinkelbeschlägen (10a bis 10d), wobei der Außenkorpus (5) eine brandhemmende Außenbeplankung (8) und vier Innenecken (7a, 7b, 7c und 7d) aufweist, wobei der Innenkorpus (6) in den Außenkorpus (5) zumindest abschnittsweise mit Abstand (4a, 4b, 4c, 4d) zu diesem eingesetzt ist, wobei das Brandschutzgehäuse (1) eine brandhemmende Tür (15) zum Öffnen und Verschließen des Brandschutzgehäuses (1) aufweist, **wobei** je ein, insbesondere metallischer, Eckwinkelbeschlag (10a, 10b, 10c, 10d) im Bereich einer Innenecke (7a, 7b, 7c oder 7d) der vier Innenecken (7a, 7b, 7c und 7d) des Außenkorpus (5) vorgesehen und am Außenkorpus (5) befestigt ist, welche Eckwinkelbeschläge (10a, 10b, 10c, 10d) sich bis zum Innenkorpus (6) erstrecken und mit diesem verbunden sind, um ihn im Außenkorpus (5) zu halten, **dadurch gekennzeichnet, dass** das Brandschutzgehäuse (1) mehrere Scharniere (16a, 16b) aufweist, welche die brandhemmende Tür (15) tragen, wobei an jedem Eckwinkelbeschlag (10c oder 10d) an einer Gehäuseseite (1b) des Brandschutzgehäuses (1) zumindest ein Scharnier (16a, 16b) befestigt ist.

2. Brandschutzgehäuse nach Anspruch 1, **dadurch gekennzeichnet, dass** der Innenkorpus (6) in den Außenkorpus (5) mit Abstand (4a, 4b, 4c, 4d) zur Bodenwand, zur Deckelwand und zu den beiden Seitenwänden des Außenkorpus (5) eingesetzt ist.

3. Brandschutzgehäuse nach Anspruch 1 oder 2, **dadurch gekennzeichnet, dass** die Eckwinkelbeschläge (10a, 10b, 10c, 10d) jeweils an drei aneinander angrenzenden Wänden des Außenkorpus (5) einer Innenecke (7a, 7b, 7c und 7d) befestigt sind.

4. Brandschutzgehäuse nach einem der Ansprüche 1 bis 3, **dadurch gekennzeichnet, dass** der Innenkorpus (6) eine Innenbeplankung (9), insbesondere mit Brandschutzplatten (9a, 9b, 9c, 9d), aufweist.

5. Brandschutzgehäuse nach einem der Ansprüche 1 bis 4, **dadurch gekennzeichnet, dass** zwei einander auf gleicher Höhe des Außenkorpus (5) gegenüberliegend angeordnete, obere Eckwinkelbeschläge (10a, 10d) je ein Schnappelement (13) aufweisen, die mit dem Innenkorpus (6) verschnappbar ausgebildet sind.

6. Brandschutzgehäuse nach einem der Ansprüche 1 bis 5, **dadurch gekennzeichnet, dass** die Eckwinkelbeschläge (10a, 10b, 10c, 10d) Anschläge (14a, 14b) aufweisen, an die der Innenkorpus (6) anschlägt.

7. Brandschutzgehäuse nach Anspruch 6, **dadurch gekennzeichnet, dass** der Innenkorpus (6) auf unteren Anschlägen (14b) von zwei einander auf gleicher Höhe des Außenkorpus (5) gegenüberliegend angeordneten, unteren Eckwinkelbeschlägen (10b, 10c) aufliegt und an oberen Anschlägen (14a) von zwei einander auf gleicher Höhe des Außenkorpus (5) gegenüberliegend angeordneten, oberen Eckwinkelbeschläge (10a, 10d) ansteht.

8. Brandschutzgehäuse nach einem der Ansprüche 1 bis 7, **dadurch gekennzeichnet, dass** die Außenbeplankung (8) Brandschutzplatten (8a, 8b, 8c, 8d) aufweist, insbesondere aus solchen besteht.

9. Brandschutzgehäuse nach einem der Ansprüche 1 bis 8, **dadurch gekennzeichnet, dass** die brandhemmende Tür (15) zum gemeinsamen Öffnen und Verschließen des Innen- und Außenkorpus (5, 6) ausgebildet ist.

10. Brandschutzgehäuse nach einem der Ansprüche 1 bis 9, **dadurch gekennzeichnet, dass** das Brandschutzgehäuse (1) einen Verriegelungsmechanismus (17) für die Tür (15) an mindestens einem Eckwinkelbeschlag (10a, 10b) aufweist.

11. Brandschutzgehäuse nach Anspruch 10, **dadurch gekennzeichnet, dass** der Verriegelungsmechanismus (17) über zwei Zapfen (18a, 18b), insbesondere mindestens an einer beweglich gelagerten Stange (18), an der Tür (15) in zwei Eckwinkelbeschläge (10a oder 10b) an einer Gehäuseseite (1a) des Brandschutzgehäuses (1) zum Verriegeln der Tür (15) eingreift.

12. Brandschutzgehäuse nach einem der Ansprüche 1 bis 11, **dadurch gekennzeichnet, dass** die Eckwinkelbeschläge (10a, 10b, 10c, 10d) je mindestens eine Montageöffnung (20) für ein Halteelement (21) zur Befestigung des Brandschutzgehäuses (1) aufweisen.

13. Notbeleuchtungs- und/oder Sicherheitsbeleuchtungsanlage (1) mit einem Brandschutzgehäuse (1) nach einem der Ansprüche 1 bis 12.

14. Verfahren zur Montage eines Brandschutzgehäuses (1) nach einem der Ansprüche 1 bis 12, **dadurch gekennzeichnet, dass** der Außenkorpus (5) am Aufstellungsort des Brandschutzgehäuses (1), insbesondere an einer Wand, befestigt wird und danach der Innenkorpus (6) in den Außenkorpus (5) eingesetzt wird.

## Claims

1. Fire protection housing, more particularly fire protection cabinet, having a cuboid outer body (5), having a cuboid inner body (6) and having a plurality of corner angle brackets (10a to 10d), wherein the outer body (5) has a fire-retardant outer cladding (8) and four inner corners (7a, 7b, 7c, and 7d), wherein the inner body (6) is inserted into the outer body (5) at least in sections with a clearance (4a, 4b, 4c, 4d) relative thereto, wherein the fire protection housing (1) has a fire-retardant door (15) for opening and closing the fire protection housing (1), wherein one, more particularly metallic, corner angle bracket (10a, 10b, 10c, 10d) each is provided in the area of an inner corner (7a, 7b, 7c or 7d) of the four inner corners (7a, 7b, 7c and 7d) of the outer body (5) and is fastened to the outer body (5), which corner angle brackets (10a, 10b, 10c, 10d) extend to the inner body (6) and are connected thereto in order to hold it in the outer body (5), **characterized in that** the fire protection housing (1) has a plurality of hinges (16a, 16b) which support the fire-retardant door (15), wherein at least one hinge (16a, 16b) is attached to each corner angle bracket (10c or 10d) on one housing side (1b) of the fire protection housing (1).

2. Fire protection housing according to claim 1, **characterized in that** the inner body (6) is inserted into the outer body (5) at a distance (4a, 4b, 4c, 4d) from the bottom wall, the top wall, and the two side walls of the outer body (5).

3. Fire protection housing according to claim 1 or 2, **characterized in that** the corner angle brackets (10a, 10b, 10c, 10d) are each attached to three mutually adjacent walls of the outer body (5) of an inner corner (7a, 7b, 7c, and 7d).

4. Fire protection housing according to one of claims 1 to 3, **characterized in that** the inner body (6) has an inner cladding (9), more particularly with fire protection panels (9a, 9b, 9c, 9d).

5. Fire protection housing according to one of claims 1 to 4, **characterized in that** two upper corner angle brackets (10a, 10d) arranged opposite each other at the same height on the outer body (5) each have a snap-in element (13) which is designed to snap into the inner body (6).

6. Fire protection housing according to one of claims 1 to 5, **characterized in that** the corner angle brackets (10a, 10b, 10c, 10d) have stops (14a, 14b) against which the inner body (6) strikes.

7. Fire protection housing according to claim 6, **characterized in that** the inner body (6) rests on lower stops (14b) of two lower corner angle brackets (10b, 10c) arranged opposite each other at the same height on the outer body (5) and rests on upper stops (14a) of two upper corner angle brackets (10a, 10d) arranged opposite each other at the same height on the outer body (5).

8. Fire protection housing according to one of claims 1 to 7, **characterized in that** the outer cladding (8) has fire protection panels (8a, 8b, 8c, 8d), more particularly consists of such panels.

9. Fire protection housing according to one of claims 1 to 8, **characterized in that** the fire-retardant door (15) is designed to open and close the inner and outer body (5, 6) together.

10. Fire protection housing according to one of claims 1 to 9, **characterized in that** the fire protection housing (1) has a locking mechanism (17) for the door (15) on at least one corner angle bracket (10a, 10b).

11. Fire protection housing according to claim 10, **characterized in that** the locking mechanism (17) engages via two bolts (18a, 18b), more particularly at least on a movably mounted rod (18), on the door (15) in two corner angle brackets (10a or 10b) on one housing side (1a) of the fire protection housing (1) to lock the door (15).

12. Fire protection housing according to one of claims 1 to 11, **characterized in that** the corner angle brackets (10a, 10b, 10c, 10d) each have at least one mounting opening (20) for a retaining element (21) for fastening the fire protection housing (1).

13. Emergency lighting and/or safety lighting system (1) having a fire protection housing (1) according to one of claims 1 to 12.

14. Method for mounting a fire protection housing (1) according to one of claims 1 to 12, **characterized in that** the outer body (5) is fastened at the installation site of the fire protection housing (1), more particularly to a wall, and then the inner body (6) is inserted into the outer body (5).

## Revendications

1. Boîtier antifeu, en particulier armoire antifeu, avec un corps extérieur (5) quadrangulaire, avec un corps intérieur (6) quadrangulaire et avec plusieurs ferrures angulaires (10a à 10d), dans lequel le corps extérieur (5) comporte un habillage extérieur coupe-feu (8) et quatre coins intérieurs (7a, 7b, 7c et 7d), dans lequel le corps intérieur (6) est inséré dans le corps extérieur (5) au moins en partie avec un écartement (4a, 4b, 4c, 4d) par rapport à celui-ci, dans lequel le boîtier antifeu (1) comporte une porte coupe-feu (15) pour ouvrir et fermer le boîtier antifeu (1), dans lequel une ferrure angulaire, (10a, 10b, 10c, 10d), en particulier métallique, est prévue au niveau de chaque coin intérieur (7a, 7b, 7c ou 7d) parmi les quatre coins intérieurs (7a, 7b, 7c et 7d) du corps extérieur (5) et fixée sur le corps extérieur (5), les ferrures angulaires (10a, 10b, 10c, 10d) s'étendant jusqu'au corps intérieur (6) et étant assemblées à celui-ci pour le retenir dans le corps extérieur (5), **caractérisé en ce que** le boîtier antifeu (1) comporte plusieurs charnières (16a, 16b) qui portent la porte coupe-feu (15), au moins une charnière (16a, 16b) étant fixée sur chaque ferrure angulaire (10c ou 10d) sur un côté de boîtier (1b) du boîtier antifeu (1).

2. Boîtier antifeu selon la revendication 1, **caractérisé en ce que** le corps intérieur (6) est introduit dans le corps extérieur (5) avec un écartement (4a, 4b, 4c, 4d) par rapport à la paroi inférieure, à la paroi supérieure et aux deux parois latérales du corps extérieur (5).

3. Boîtier antifeu selon la revendication 1 ou 2, **caractérisé en ce que** les ferrures angulaires (10a, 10b, 10c, 10d) sont fixées respectivement sur trois parois contiguës du corps extérieur (5) d'un coin intérieur (7a, 7b, 7c et 7d).

4. Boîtier antifeu selon l'une des revendications 1 à 3, **caractérisé en ce que** le corps intérieur (6) comporte un habillage intérieur (9), en particulier en panneaux antifeu (9a, 9b, 9c, 9d).

5. Boîtier antifeu selon l'une des revendications 1 à 4, **caractérisé en ce que** deux ferrures angulaires supérieures (10a, 10d) disposées l'une en face de l'autre à la même hauteur du corps extérieur (5) comportent chacune un élément d'enclenchement (13) conçu pour pouvoir s'enclencher avec le corps intérieur (6).

6. Boîtier antifeu selon l'une des revendications 1 à 5, **caractérisé en ce que** les ferrures angulaires (10a, 10b, 10c, 10d) comportent des butées (14a, 14b) sur lesquelles bute le corps intérieur (6).

7. Boîtier antifeu selon la revendication 6, **caractérisé en ce que** le corps intérieur (6) repose sur des butées inférieures (14b) de deux ferrures angulaires inférieures (10b, 10c) disposées l'une en face de l'autre à la même hauteur du corps extérieur (5) et sur des butées supérieures (14a) de deux ferrures angulaires supérieures (10a, 10d) disposées l'une en face de l'autre à la même hauteur du corps extérieur (5).

8. Boîtier antifeu selon l'une des revendications 1 à 7, **caractérisé en ce que** l'habillage extérieur (8) comporte des panneaux antifeu (8a, 8b, 8c, 8d), en particulier se compose de ceux-ci.

9. Boîtier antifeu selon l'une des revendications 1 à 8, **caractérisé en ce que** la porte coupe-feu (15) est conçue pour ouvrir et fermer les corps intérieur et extérieur (5, 6) ensemble.

10. Boîtier antifeu selon l'une des revendications 1 à 9, **caractérisé en ce que** le boîtier antifeu (1) comporte un mécanisme de verrouillage (17) pour la porte (15) sur au moins une ferrure angulaire (10a, 10b).

11. Boîtier antifeu selon la revendication 10, **caractérisé en ce que** le mécanisme de verrouillage (17) se met en prise dans deux ferrures angulaires (10a ou 10b) sur un côté de boîtier (la) du boîtier antifeu (1) par deux goujons (18a, 18b), en particulier au moins une tige (18) supportée de façon mobile, sur la porte (15) afin de verrouiller la porte (15).

12. Boîtier antifeu selon l'une des revendications 1 à 11, **caractérisé en ce que** les ferrures angulaires (10a, 10b, 10c, 10d) comportent chacune une ouverture de montage (20) pour un élément de maintien (21) en vue de la fixation du boîtier antifeu (1).

13. Installation d'éclairage d'urgence et/ou d'éclairage de secours (1) munie d'un boîtier antifeu (1) selon l'une des revendications 1 à 12.

14. Procédé pour le montage d'un boîtier antifeu (1) selon l'une des revendications 1 à 12, **caractérisé en ce que** le corps extérieur (5) est fixé à l'emplacement d'installation du boîtier antifeu (1), en particulier sur une paroi, et le corps intérieur (6) est ensuite introduit dans le corps extérieur (5).
